# EUROPEAN PATENT APPLICATION

(11) **EP 4 309 950 A1**
(43) Date of publication of application: **24.01.2024**
(21) Application number: 23179104.7
(22) Date of filing: 14.06.2023
(51) Int. Cl.: B60N 2/28

(54) **LAP BELT LENGTH ADJUSTING DEVICE AND CHILD SAFETY SEAT**

(30) Priority: 12.07.2022 CN 202221802046 U; 18.11.2022 CN 202211448798
(71) Applicant: Wonderland Switzerland AG, 6312 Steinhausen (CH)
(72) Inventor: ZHAO, Guanghui, Guangdong, 523648 (CN)
(74) Representative: ERNICKE Patent- und Rechtsanwälte PartmbB

(57) **Abstract**

A lap belt length adjusting device for a child safety seat (1) is provided. A lap belt (100) of the child safety seat (1) includes a fixing end (101) and a free end (102), the fixing end (101) is fixed to a seat part (10) of the child safety seat (1), and the free end (102) is pulled by a user, the lap belt length adjusting device includes: an adjusting structure (200) arranged at the seat part (10) and through which the free end (102) passes, wherein after the free end (102) passes through the adjusting structure (200), a length of a use section of the lap belt (100) between the fixing end (101) and the adjusting structure (200) can be increased or decreased; and a locking structure (300) for locking or unlocking the lap belt (100) between the adjusting structure (200) and the free end (102), to prevent or allow an increase or decrease in the length of the use section of the lap belt (100) between the fixing end (101) and the adjusting structure (200). The lap belt length adjusting device according to the present disclosure can adjust the length of the lap belt (100) to be suitable for children of different sizes, and it is convenient to adjust and operate the lap belt (100).

## Description

### Technical field

This disclosure relates to a child safety seat, and more particularly, to a lap belt length adjusting device for the child safety seat.

### Background

The child safety seat is generally designed with multi-level modes to accommodate children of different sizes. For this purpose, a length and a height of a shoulder belt and a lap belt have to be designed in an adjustable mode.

### Summary

An object of the present disclosure is to provide a lap belt length adjusting device and a child safety seat, which can adjust the length of the lap belt to be suitable for children of different sizes and may have the lap belt to be easily adjusted.

As embodied and described herein, in order to achieve these and other advantages and according to the object of the present disclosure, a lap belt length adjusting device for a child safety seat is proposed. A lap belt of the child safety seat includes a fixing end and a free end, the fixing end is fixed to a seat part of the child safety seat, and the free end is pulled by a user, the lap belt length adjusting device includes: an adjusting structure arranged at the seat part and through which the free end passes, wherein after the free end passes through the adjusting structure, a length of a use section of the lap belt between the fixing end and the adjusting structure can be increased or decreased; and a locking structure for locking or unlocking the lap belt between the adjusting structure and the free end, to prevent or allow an increase or decrease in the length of the use section of the lap belt between the fixing end and the adjusting structure.

In an embodiment, the adjusting structure is a first opening penetrating through an upper surface of the seat part, and the free end of the lap belt passes through the first opening to a bottom of the seat part.

In an embodiment, a lower recess is arranged on the upper surface of the seat part, and the locking structure is located in the lower recess.

In an embodiment, the locking structure includes: a fixing case having a U-shaped structure and fixed to the lower recess; a locking member pivoted to the fixing case and comprising an operating end and a locking end, and the operating end being exposed out of the fixing case to be operated by the user, wherein the lap belt passes through the lower recess and then passes through the upper surface on a bottom of the U-shaped structure to be located between the bottom of the U-shaped structure and the locking member, and the locking end of the locking member is configured to press and lock the lap belt.

In an embodiment, the locking structure further includes an elastic member that drives the locking member to lock the lap belt.

In an embodiment, the free end of the lap belt is exposed to the upper surface of the seat part at a side of the seat part.

In an embodiment, a second opening is arranged on the upper surface of the seat part, and the fixing end of the lap belt is fixed to the second opening.

In an embodiment, the fixing end of the lap belt passes through the second opening and then is connected with a fixing member, and the fixing member is blocked by the second opening, such that the fixing end is not withdrawn from the second opening.

In an embodiment, a buckle is slidably connected to the lap belt between the fixing end and the adjusting structure.

In another embodiment, the present disclosure proposes a lap belt of the child safety seat includes a fixing end and a free end, the fixing end is fixed to a seat part of the child safety seat, and the free end is pulled by a user, the lap belt length adjusting device includes an adjustable locking structure fixed to the seat part and through which the free end passes, wherein after the free end passes through the adjustable locking structure, a length of a use section of the lap belt between the fixing end and the adjustable locking structure can be increased or decreased; and the adjustable locking structure is configured to lock or unlock the lap belt passing through the adjustable locking structure, to prevent or allow an increase or decrease in the length of the use section of the lap belt between the fixing end and the adjustable locking structure.

In a further another embodiment, the present disclosure proposes a child safety seat, and the child safety seat employs the aforesaid lap belt length adjusting device.

An advantageous effect of the present disclosure lies in that the lap belt length adjusting device according to the present disclosure can adjust the length of the lap belt to be suitable for children of different sizes, and it is convenient to adjust and operate the lap belt.

The foregoing and other objects, features, aspects and advantages of the present disclosure will become more apparent from the detailed description of the disclosure taken in conjunction with the accompanying drawings.

### Brief description of the drawings

The accompanying drawings, which are incorporated in and constitute a part of this specification, illustrate examples consistent with the present disclosure, together with the description, serve to explain the principles of the present disclosure.

In the drawings:
Fig. 1 is a schematic front view of a child safety seat with a lap belt length adjusting device according to an embodiment of the present disclosure.
Fig. 2 is a schematic view of the child safety seat as shown in Fig. 1, observed from above.
Fig. 3 is a schematic view of the child safety seat as shown in Fig. 1, observed from back.
Fig. 4 is a top view of the child safety seat with the lap belt length adjusting device according to an embodiment of the present disclosure.
Fig. 5 is a sectional view taken along a line A-A in Fig. 4.
Fig. 6 is an enlarged view of an area B in Fig. 5.
Fig. 7 is a sectional view of a child safety seat with a lap belt length adjusting device according to another embodiment of the present disclosure.

### List of reference numbers

- 1: Child safety seat
- 10: Seat part
- 11: Upper surface
- 12: Lower recess
- 13: Second opening
- 20: Fixing member
- 30: Buckle
- 100: Lap belt
- 101: Fixing end
- 102: Free end
- 200: Adjusting structure
- 300: Locking structure
- 310: Fixing case
- 320: Locking member
- 321: Operating end
- 322: Locking end
- 330: Elastic member
- 400: Adjustable locking structure

### Detailed description

The length of the lap belt of the child safety seat is generally set to be non-adjustable, which can cause discomfort and safety issues for children sitting in the seat due to that a buckle is too low because of excessively short lap belt when the shoulder belt of the child safety seat is being adjusted.

The present disclosure provides a lap belt length adjusting device. Hereinafter, the present disclosure will be described in detail with reference to the accompanying drawings.

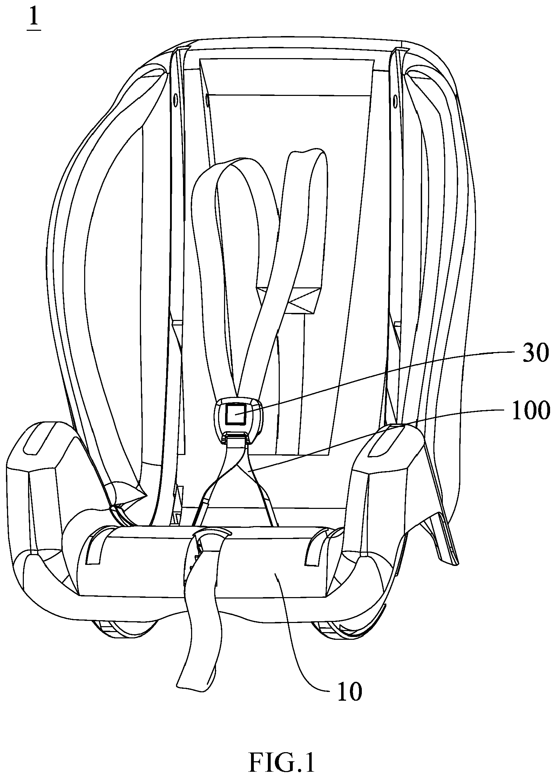

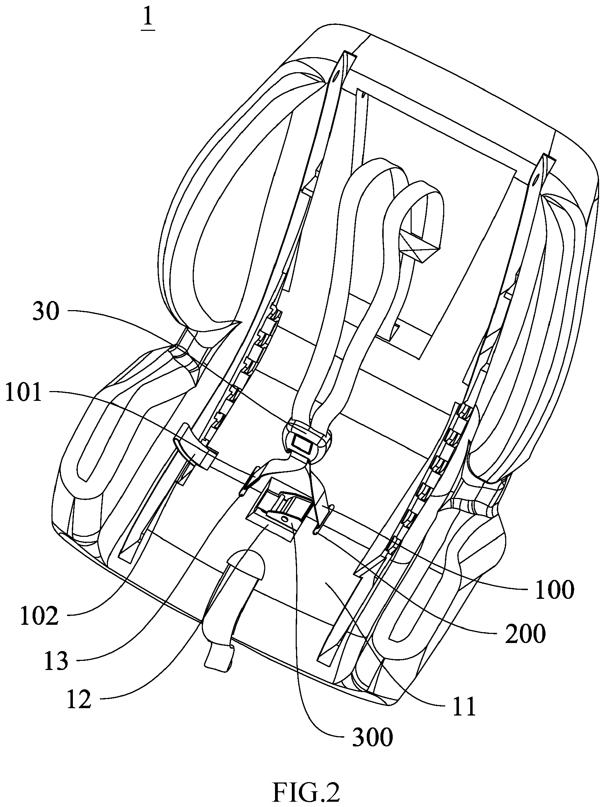

Figs. 1 and 2 show a child safety seat 1 with a lap belt length adjusting device according to the present disclosure, in which a lap belt 100 of the child safety seat 1 includes a fixing end 101 and a free end 102 that may be pulled by a user.

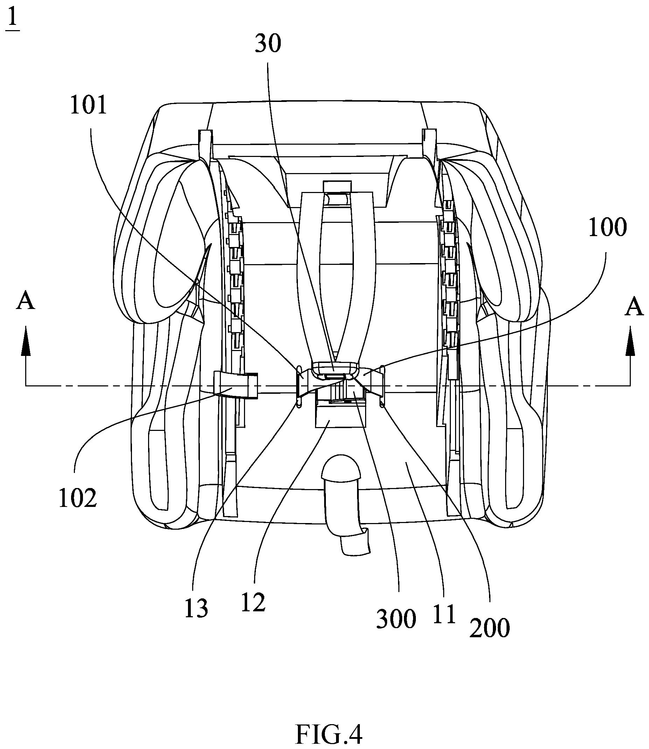

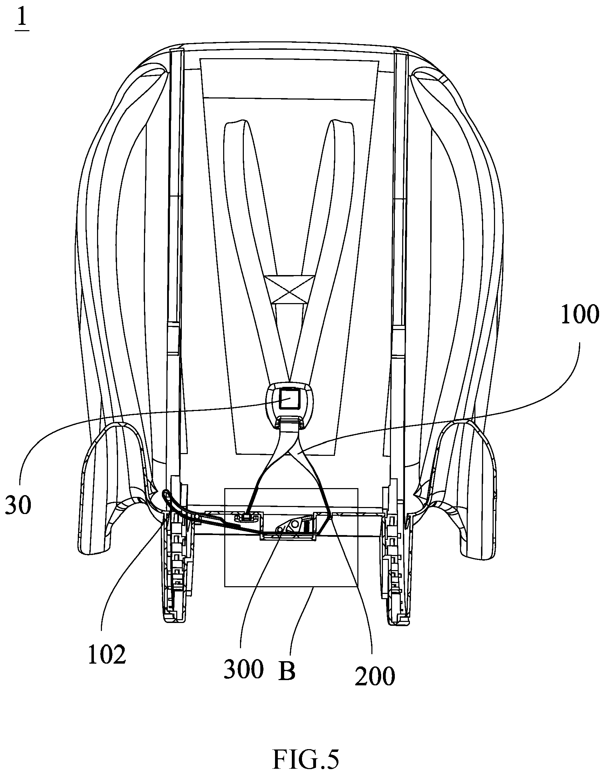

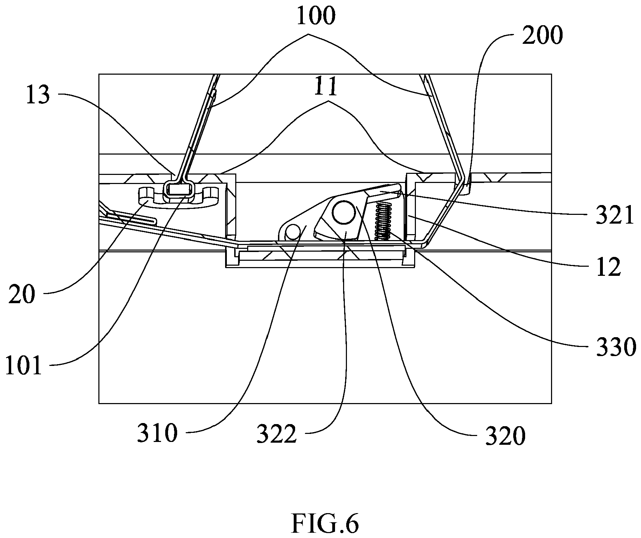

The fixing end 101 of the lap belt 100 may be fixed to a seat part 10 of the child safety seat 1. In embodiments as shown in Figs. 2, 4, 5 and 6, an upper surface 11 of the seat part 10 may be provided with a second opening 13, and the fixing end 101 of the lap belt 100 may be fixed to the second opening 13. In one fixing way, the fixing end 101 of the lap belt 100 may be folded relative to itself for several times after passing through the second opening 13, so that a volume of the fixing end 101 is larger than that of the second opening 13 and then may not be withdrawn from the second opening 13, thereby realizing the fixing. In the embodiments as shown in Figs. 5 and 6, the fixing end 101 of the lap belt 100 may be connected with a fixing member 20 after passing through the second opening 13, and the fixing member 20 is blocked by the second opening 13, so that the fixing end 101 may not be withdrawn from the second opening 13. Of course, the present disclosure is not limited thereto, and the fixing end 101 of the lap belt 100 may be fixed to the seat part 10 of the child safety seat 1 in various ways, for example, the upper surface 11 of the seat part 10 may be provided with a hook, and the fixing end 101 of the lap belt 100 may be connected to the hook, thereby realizing the fixing.

Referring to Figs. 2, 4 and 5, the lap belt length adjusting device according to the present disclosure may include an adjusting structure 200 and a locking structure 300.

The adjusting structure 200 may be arranged at the seat part 10 and though which the free end 102 may pass, after the free end 102 passes through the adjusting structure 200, a length of a use section of the lap belt 100 between the fixing end 101 and the adjusting structure 200 can be increased or decreased.

It should be explained that the use section of the lap belt 100 may refer to a section of the lap belt 100 between the fixing end 101 and the adjusting structure 200. As the lap belt 100 is not fixedly connected with the adjusting structure 200, the lap belt 100 may slide through the adjusting structure 200, so that the length of the use section of the lap belt 100 can be changed. On one aspect, the user may increase the length of the use section of the lap belt 100 by pulling any portion of the use section of the lap belt 100, on the other aspect, the user may decrease the length of the use section of the lap belt 100 by pulling the free end 102 of the lap belt 100. To this end, the length of the use section of the lap belt 100 can be adjustable in order to be suitable for children of different sizes.

In addition, a buckle 30 may be slidably connected to the use section of the lap belt 100, and the buckle 30 may be configured to connect with the shoulder belt (not shown) of the child safety seat 1.

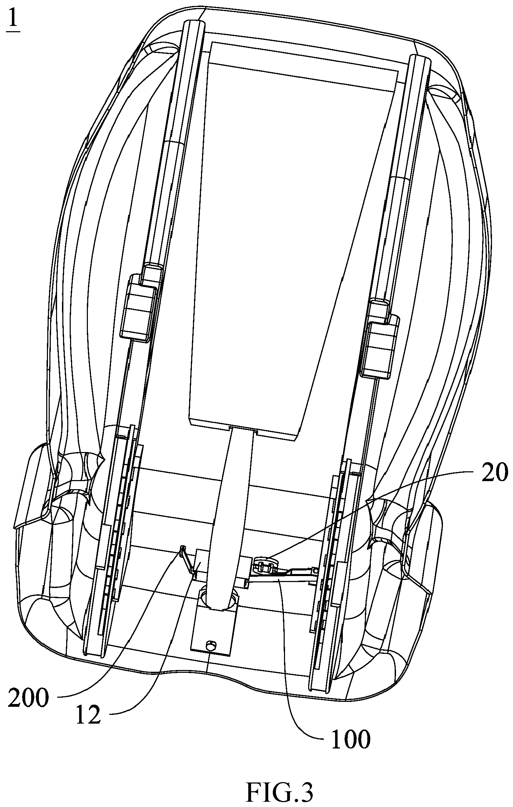

In the embodiments as shown in Figs. 2 to 6, the adjusting structure 200 may be a first opening penetrating through the upper surface 11 of the seat part 10, and the free end 102 of the lap belt 100 may pass through the first opening to reach a lower part of the seat part 10. In addition, in this case, the free end 102 may be exposed from the upper surface 11 of the seat part 10 at a side of the seat part 10 in order to facilitate the user to adjust the length of the use section of the lap belt 100 by pulling the free end 102. Of course, the free end 102 may also be exposed to the upper surface 11 of the seat part 10 at other parts of the seat part 10, as long as it is convenient for the user to operate.

Furthermore, the adjusting structure 200 according to the present disclosure is not limited thereto. The adjusting structure 200 may also be a ring part arranged on the upper surface 11 of the seat part 10, and the free end 102 of the lap belt 100 may pass through the ring part. Alternatively, the adjusting structure 200 may adopt other structures as long as the free end 102 of the lap belt 100 may pass through the structure to allow the lap belt 100 to be slidable in the structure.

In the case that the use section of the lap belt 100 may be adjusted to an appropriate length, it is necessary to use a locking structure 300 to prevent the length of the use section of the lap belt 100 from being continuously increased or decreased, so as to keep the use section of the lap belt 100 at the appropriate length.

In the embodiments as shown in Figs. 5 and 6, the locking structure 300 may include a fixing case 310 and a locking member 320. The fixing case 310 may be fixed to the seat part 10. The fixing case 310 may have a U-shaped structure, and the lap belt may pass through the upper surface on the bottom of the U-shaped structure and may be located between the bottom of the U-shaped structure and the locking member 320. The locking member 320 may be pivoted to the fixing case 310, so that the locking member 320 may be pivotable between a locking state and an unlocking state. The locking member 320 may include an operating end 321 and a locking end 322, in which the operating end 321 may be exposed out of the fixing case 310 to be operated by the user, and the locking end 322 may press and lock the lap belt 100. When the user operates the operating end 321 of the locking member 320 (for example, lift the operating end 321 upward) to pivot the locking member 320 to the locking state, the locking end 322 may press and lock the lap belt 100 to lock the lap belt 100 so as to keep the length of the use section of the lap belt 100 unchanged. When the user presses down the operating end 321 of the locking member 320, the locking member 320 may be pivoted to the unlocking state, the locking end 322 may be far away from the lap belt 100 to unlock the lap belt 100 so as to adjust the length of the use section of the lap belt 100.

In order to simplify the user's operation, as shown in Figs. 5 and 6, the locking structure 300 may further include an elastic member 330. The elastic member 330 may drive the locking member 320 to pivot toward a direction in which the lap belt 100 is locked (i.e., the locking state). The arrangement of the elastic member 330 not only can omit an operation that the user locks the lap belt 100 manually, but also can facilitate keeping the length of the use section of the lap belt 100 unchanged. The elastic member 330 may be formed of various suitable elastic components such as a compression spring and a torsion spring.

In addition, if the locking structure 300 is located on the upper surface 11 of the seat part 10, the locking structure 300 will occupy part of a sitting area of the seat part 10, which may affect the comfort of children sitting on the seat part 10. In order to avoid this situation, in the embodiments as shown in Figs. 2 to 6, a lower recess 12 may be disposed on the upper surface 11 of the seat part 10, and the locking structure 300 may be located in the lower recess 12. In this case, the fixing case 310 of the locking structure 300 may be fixed to the lower recess 12, and the lap belt 100 may pass through the lower recess 12 and then pass through the upper surface on the bottom of the U-shaped structure of the fixing case 310 to be located between the bottom of the U-shaped structure and the locking member 320, as shown in Figs. 5 and 6.

It should be understood that the locking structure 300 according to the present disclosure is not limited thereto. For example, the locking structure 300 may be configured as a clamping structure that may not be fixed to the seat part 10. In the case that the use section of the lap belt 100 is adjusted to an appropriate length, the clamping structure may be clamped at the use section of the lap belt 100 adjacent to the adjusting structure 200. Since the clamping structure cannot pass through the adjusting structure 200, when the free end 102 of the lap belt 100 may be pulled, the clamping structure may be blocked by the adjusting structure 200 such that the lap belt 100 clamped by the clamping structure cannot continue to slide in the adjusting structure 200, to lock the lap belt 100. In the case that the length of the use section of the lap belt 100 is required to be adjusted, as long as the clamping structure may be operated not to clamp the lap belt 100 no longer, the lap belt 100 may be slidable in the adjusting structure 200 to unlock the lap belt 100.

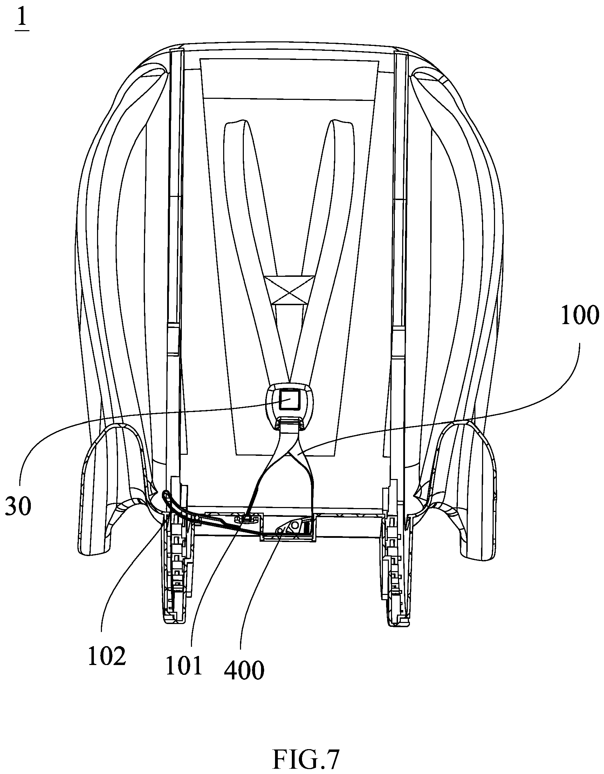

In another embodiment, as shown in Fig. 7, the lap belt length adjusting device according to the present disclosure may only include an adjustable locking structure 400 instead of the adjusting structure 200 and the locking structure 300. The adjustable locking structure 400 may be fixed at the seat part 10 and through which the free end 102 may pass. After the free end 102 passes through the adjustable locking structure 400, the length of the use section of the lap belt 100 between the fixing end 101 and the adjustable locking structure 400 can be increased or decreased. Furthermore, the adjustable locking structure 400 may lock or unlock the lap belt 100 passing therethrough to prevent or allow the increase or decrease of the length of the use section of the lap belt 100 between the fixing end 101 and the adjustable locking structure 400. In another embodiment, the adjustable locking structure 400 actually integrates the adjusting structure 200 and the locking structure 300 in the preceding embodiment, to play a role of simultaneously adjusting and locking the length of the use section of the lap belt 100.

It should be understood that the adjustable locking structure 400 may be configured in various suitable structures, for example, the aforementioned locking structure fixed to the seat part 10, with difference in that the lap belt 100 may not pass through the first opening, but directly pass through the adjustable locking structure 400, as shown in Fig. 7. Alternatively, the adjustable locking structure 400 may be configured as a clamping structure which may be fixed to the seat part 10, in which the lap belt 100 may pass through the clamping structure, and when the clamping structure clamps the lap belt 100, the lap belt 100 is locked; when the clamping structure releases the lap belt 100, the lap belt 100 is unlocked, in this way, the length of the use section of the lap belt 100 can be adjusted and locked.

## Claims

1. A lap belt length adjusting device for a child safety seat (1), wherein a lap belt (100) of the child safety seat (1) comprises a fixing end (101) and a free end (102), the fixing end (101) is fixed to a seat part (10) of the child safety seat (1), and the free end (102) is pulled by a user, the lap belt length adjusting device comprises:
an adjusting structure (200) arranged at the seat part (10) and through which the free end (102) passes, wherein after the free end (102) passes through the adjusting structure (200), a length of a use section of the lap belt (100) between the fixing end (101) and the adjusting structure (200) can be increased or decreased; and
a locking structure (300) for locking or unlocking the lap belt (100) between the adjusting structure (200) and the free end (102), to prevent or allow an increase or decrease in the length of the use section of the lap belt (100) between the fixing end (101) and the adjusting structure (200).

2. The lap belt length adjusting device according to claim 1, wherein the adjusting structure (200) is a first opening penetrating through an upper surface (11) of the seat part (10), and the free end (102) of the lap belt (100) passes through the first opening to a bottom of the seat part (10).

3. The lap belt length adjusting device according to claim 2, wherein a lower recess (12) is arranged on the upper surface (11) of the seat part (10), and the locking structure (300) is located in the lower recess (12).

4. The lap belt length adjusting device according to claim 3, wherein the locking structure (300) comprises:
a fixing case (310) having a U-shaped structure and fixed to the lower recess (12);
a locking member (320) pivoted to the fixing case (310) and comprising an operating end (321) and a locking end (322), and the operating end (321) being exposed out of the fixing case (310) to be operated by the user;
wherein the lap belt (100) passes through the lower recess (12) and
then passes through the upper surface (11) on a bottom of the U-shaped structure to be located between the bottom of the U-shaped structure and the locking member (320), and the locking end (322) of the locking member (320) is configured to press and lock the lap belt (100).

5. The lap belt length adjusting device according to claim 4, wherein the locking structure (300) further comprises an elastic member (330) that drives the locking member (320) to lock the lap belt (100).

6. The lap belt length adjusting device according to claim 4, wherein the free end (102) of the lap belt (100) is exposed to the upper surface (11) of the seat part (10) at a side of the seat part (10).

7. The lap belt length adjusting device according to any one of claims 1-6, wherein a second opening (13) is arranged on the upper surface (11) of the seat part (10), and the fixing end (101) of the lap belt (100) is fixed to the second opening (13).

8. The lap belt length adjusting device according to claim 7, wherein the fixing end (101) of the lap belt (100) passes through the second opening (13) and then is connected with a fixing member (20), and the fixing member (20) is blocked by the second opening (13), such that the fixing end (101) is not withdrawn from the second opening (13).

9. The lap belt length adjusting device according to any one of claims 1-6, wherein a buckle (30) is slidably connected to the lap belt (100) between the fixing end (101) and the adjusting structure (200).

10. A lap belt length adjusting device for a child safety seat (1), wherein a lap belt (100) of the child safety seat (1) comprises a fixing end (101) and a free end (102), the fixing end (101) is fixed to a seat part (10) of the child safety seat (1), and the free end (102) is pulled by a user, the lap belt length adjusting device comprises:
an adjustable locking structure (400) fixed to the seat part (10) and through which the free end (102) passes, wherein after the free end (102) passes through the adjustable locking structure (400), a length of a use section of the lap belt (100) between the fixing end (101) and the adjustable locking structure (400) can be increased or decreased; and
the adjustable locking structure (400) is configured to lock or unlock the lap belt (100) passing through the adjustable locking structure (400), to prevent or allow an increase or decrease in the length of the use section of the lap belt (100) between the fixing end (101) and the adjustable locking structure (400).

11. A child safety seat (1), wherein the child safety seat (1) employs the lap belt length adjusting device according to any one of claims 1-10.
